# FASCICULE DE BREVET EUROPEEN

(11) **EP 3 105 484 B1**
(45) Date de publication et mention de la délivrance du brevet: **10.04.2019**
(21) Numéro de dépôt: 15705012.1
(22) Date de dépôt: 13.02.2015
(51) Int. Cl.: F16L 9/16, F16L 11/08, F16L 11/16

(54) **CONDUITE FLEXIBLE DE TRANSPORT DE FLUIDE MUNIE D'UN INSERT EN FORME DE S ÉTENDU ET PROCÉDÉ DE FABRICATION ASSOCIÉ**
FLEXIBLES ROHR ZUM TRANSPORTIEREN EINER FLÜSSIGKEIT MIT AUSGEDEHNTEM S-FÖRMIGEN EINSATZ UND ZUGEHÖRIGES VERFAHREN ZUR HERSTELLUNG
FLEXIBLE PIPE FOR TRANSPORTING A FLUID EQUIPPED WITH A LAZY-S-SHAPED INSERT AND ASSOCIATED METHOD FOR MANUFACTURE

(30) Priorité: 13.02.2014 FR 1451130
(43) Date de publication de la demande: 21.12.2016
(73) Titulaire: Technip France, 92400 Courbevoie (FR)
(72) Inventeur: SECHER, Philippe, F-76250 Déville-lès-Rouen (FR); JUNG, Patrice, 46389 TURIS (Altury) (ES)
(74) Mandataire: Lavoix
(86) Numéro de dépôt international: PCT/EP2015/053114
(87) Numéro de publication internationale: WO 2015/121424

(56) Documents cités:
- WO-A1-92/02751
- FR-A- 908 737
- FR-A1- 2 583 133
- FR-A1- 2 800 181
- FR-A1- 2 904 992
- US-A- 3 204 666
- US-A1- 2002 195 157

## Description

La présente invention concerne une conduite flexible de transport de fluide, selon le préambule de la revendication 1.

La conduite est de préférence une conduite flexible de type non liée (« unbonded » en anglais), destinée au transport d'hydrocarbures à travers une étendue d'eau, tel qu'un océan, une mer, un lac ou une rivière.

Une telle conduite flexible est par exemple réalisée suivant les documents normatifs API 17J (Spécification for Unbonded Flexible Pipe) et API RP 17B (Recommended Practice for Flexible Pipe) établis par l'American Petroleum Institute.

La conduite est généralement formée d'un ensemble de couches concentriques et superposées. Elle est considérée comme « non liée » au sens de la présente invention dès lors qu'au moins une des couches de la conduite est apte à se déplacer longitudinalement par rapport aux couches adjacentes lors d'une flexion de la conduite. En particulier, une conduite non liée est une conduite dépourvue de matériaux liants raccordant des couches formant la conduite.

La conduite est généralement disposée à travers une étendue d'eau, entre un ensemble de fond, destiné à recueillir le fluide exploité dans le fond de l'étendue d'eau et un ensemble de surface flottant ou fixe, destiné à collecter et à distribuer le fluide. L'ensemble de surface peut être une plateforme semi-submersible, un FPSO ou un autre ensemble flottant.

Dans certains cas, la conduite flexible comprend une carcasse interne disposée dans la gaine de pression, afin d'éviter l'écrasement de la gaine de pression, sous l'effet de la pression externe, par exemple lors d'une dépressurisation du passage interne de circulation de fluide délimité par la gaine de pression. FR 2 583 133, FR 2 904 992, et FR 2 800 181 décrivent des conduites flexibles munies de carcasses internes.

La carcasse interne est généralement formée d'un feuillard métallique profilé, enroulé en spirale. Les spires du feuillard sont agrafées les unes aux autres. Les spires délimitent entre elles un interstice hélicoïdal débouchant radialement vers l'intérieur dans le passage central de circulation du fluide.

La surface interne de la carcasse présente donc axialement une succession de creux et de bosses. La conduite est alors généralement qualifiée par le terme anglais « rough bore ».

Dans certains cas, la circulation du fluide le long de la carcasse est perturbée par les reliefs définis sur la carcasse par l'interstice hélicoïdal.

Cette perturbation de l'écoulement est parfois considérée comme l'origine de phénomènes de vibrations au sein de la conduite flexible, voire, lorsqu'une résonance est atteinte, de pulsations induites par la circulation de fluide (« flow induced pulsations » ou « singing » en anglais).

Pour pallier ce problème, il est connu de fabriquer des conduites flexibles dépourvues de carcasse interne et présentant donc une surface lisse (« smooth bore » en anglais).

Une autre solution à ce problème est décrite dans WO 2014/000816. Dans ce document, la conduite flexible comprend une carcasse dans laquelle un insert hélicoïdal de section en forme de T est coincé dans l'interstice présent entre les différentes spires de la carcasse. L'insert bouche l'interstice vers l'intérieur.

Le profil en forme de T est fabriqué à partir de deux feuilles planes, par exemple par soudure entre les feuilles.

La fabrication d'un tel insert, et sa disposition dans la carcasse est donc très difficile à mettre en oeuvre industriellement.

En particulier, l'assemblage par soudure de deux feuillards nécessite de mettre en oeuvre des équipements importants en ligne, tels que des dérouleurs, un assembleur, un poste de soudure laser, etc.

Le profil en forme de T décrit dans ce document n'est donc pas simple à réaliser, et peut conduire à des difficultés industrielles et à un coût de revient élevé pour la conduite.

Un but de l'invention est donc de fournir une conduite dans laquelle le risque de vibrations, voire de pulsations est limité, et qui soit néanmoins simple et économique à fabriquer à l'échelle industrielle.

À cet effet, l'invention a pour objet une conduite selon la revendication 1.

La conduite selon l'invention peut comprendre l'une ou plusieurs des caractéristiques des revendications 2 à 11, prise(s) isolément ou suivant toute combinaison techniquement possible.

L'invention a aussi pour objet un procédé de fabrication selon la revendication 12.

Le procédé selon l'invention peut comprendre l'une ou plusieurs des caractéristiques 13 à 16, prise(s) isolément ou suivant toute combinaison techniquement possible.

L'invention sera mieux comprise, à la lecture de la description qui va suivre, donnée uniquement à titre d'exemple, et faite en se référant aux dessins annexés, sur lesquels :
- la figure 1 est une vue en perspective partiellement écorchée d'un tronçon central d'une première conduite flexible selon l'invention ;
- la figure 2 est une vue partielle, prise en coupe suivant un plan axial médian, d'un détail de la conduite de la figure 1 illustrant la carcasse et l'insert disposé dans l'interstice de la carcasse ;
- la figure 3 est une vue d'un détail de la figure 2, illustrant une section en S allongé de l'insert;
- les figures 4 et 5 illustrent deux variantes de conformation des bords latéraux du profil de l'insert ;
- la figure 6 est une vue schématique en bout d'un poste de fabrication et de pose de la carcasse et de l'insert ;
- la figure 7 est une vue schématique en coupe partielle suivant le plan axial VII de la figure 5 ;
- la figure 8 est une vue illustrant les opérations réalisées par la profileuse d'insert pour la mise en forme de l'insert ;
- la figure 9 illustre un système d'insertion du profil d'insert dans le profil de carcasse, dans le poste de fabrication de la figure 5 ;
- les figures 10 et 11 illustrent des variantes d'inserts disposés dans des conduites selon l'invention ;
- les figures 12 et 13 sont des vues analogues à la figure 5 illustrant des variantes de postes de fabrication et de pose de la carcasse et de l'insert ;
- la figure 14 illustre une autre variante d'insert.

Dans tout ce qui suit, les termes « extérieur » et « intérieur » s'entendent généralement de manière radiale par rapport à un axe A-A' de la conduite, le terme « extérieur » s'entendant comme relativement plus éloigné radialement de l'axe A-A' et le terme « intérieur » s'étendant comme relativement plus proche radialement de l'axe A-A' de la conduite.

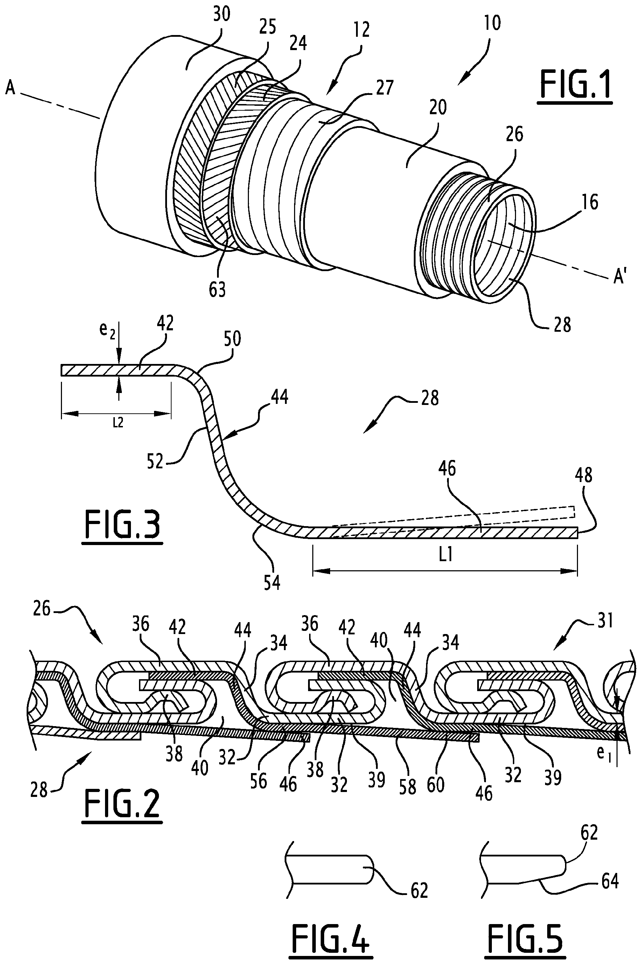

Une première conduite flexible 10 selon l'invention est illustrée partiellement par la figure 1.

La conduite flexible 10 comporte un tronçon central 12. Elle comporte, à chacune des extrémités axiales du tronçon central 12, un embout d'extrémité (non visible).

En référence à la figure 1, la conduite 10 délimite un passage central 16 de circulation d'un fluide, avantageusement d'un fluide pétrolier. Le passage central 16 s'étend suivant un axe A-A', entre l'extrémité amont et l'extrémité aval de la conduite 10.

La conduite flexible 10 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau au droit de l'installation d'exploitation de fluide est par exemple comprise entre 500 m et 3000 m.

L'installation d'exploitation de fluide comporte un ensemble de surface notamment flottant et un ensemble de fond (non représentés) qui sont généralement raccordés entre eux par la conduite flexible 10.

La conduite flexible 10 est de préférence une conduite « non liée » (désignée par le terme anglais « unbonded »).

Au moins deux couches adjacentes de la conduite flexible 10 sont libres de se déplacer longitudinalement l'une par rapport à l'autre lors d'une flexion de la conduite.

Avantageusement, toutes les couches de la conduite flexible sont libres de se déplacer l'une par rapport à l'autre. Une telle conduite est par exemple décrite dans les documents normatifs publiés par l'American Petroleum Institute (API), API 17J, et API RP17B.

Comme illustré par la figure 1, la conduite 10 délimite une pluralité de couches concentriques autour de l'axe A-A', qui s'étendent continûment le long du tronçon central 12 jusqu'aux embouts situés aux extrémités de la conduite.

Selon l'invention, la conduite 10 comporte au moins une première gaine tubulaire 20 à base de matériau polymère constituant avantageusement une gaine de pression.

La conduite 10 comporte en outre au moins une couche d'armures de traction 24, 25 disposée extérieurement par rapport à la première gaine 20 formant une gaine de pression.

La conduite 10 comporte en outre une carcasse interne 26 disposée à l'intérieur de la gaine de pression 20, éventuellement une voûte de pression 27 intercalée entre la gaine de pression 20 et la ou les couches d'armures de traction 24, 25, et une gaine externe 30, destinée à la protection de la conduite 10.

Selon l'invention, la conduite 10 comporte en outre un insert 28 présentant une section transversale en forme de S étendu, l'insert 28 étant disposé en appui intérieur sur la carcasse interne 26.

De manière connue, la gaine de pression 20 est destinée à confiner de manière étanche le fluide transporté dans le passage 16. Elle est formée en matériau polymère, par exemple à base d'un polyoléfine tel que du polyéthylène, à base d'un polyamide tel que du PA11 ou du PA12, ou à base d'un polymère fluoré tel que du polyfluorure de vinylidène (PVDF).

L'épaisseur de la gaine de pression 20 est par exemple comprise entre 5 mm et 20 mm.

Comme illustré par la figure 2, la carcasse 26 est formée ici d'un premier feuillard 31 métallique profilé, enroulé en hélice. Les spires successives du feuillard 31 sont agrafées les unes aux autres.

La fonction principale de la carcasse 26 est de reprendre les efforts radiaux d'écrasement.

La carcasse 26 est disposée à l'intérieur de la gaine de pression 20. Elle est propre à entrer en contact avec le fluide circulant dans la gaine de pression 20.

L'enroulement hélicoïdal du premier feuillard 31 profilé formant la carcasse 26 est à pas court, c'est-à-dire qu'il présente un angle d'hélice de valeur absolue proche de 90°, typiquement compris entre 75° et 90°.

Le premier feuillard 31 présente deux bords repliés longitudinalement sur une région centrale. Il définit une pluralité de spires agrafées de section en forme de S refermé et aplati, telle qu'illustrées par la Figure 2. Le premier feuillard 31 présente une épaisseur e1 sensiblement constante.

La section en S refermé de chaque spire de la carcasse 26 comprend successivement, parallèlement à l'axe A-A' de droite à gauche sur la figure 2, une partie intérieure 32 en forme générale de U, une partie intermédiaire inclinée 34 et une partie extérieure 36 en forme générale de U présentant, au voisinage de son extrémité libre, une onde d'appui 38, communément désignée par le terme « téton ».

La partie intérieure 32 de chaque spire du premier feuillard 31 est repliée vers la partie intermédiaire 34 à l'écart de l'axe central A-A', extérieurement par rapport à la partie inclinée 34. Elle définit une section en U s'étendant parallèlement à l'axe A-A' et s'ouvrant en regard de la partie inclinée 34.

La partie extérieure 36 d'une spire adjacente est partiellement engagée dans la partie intérieure 32, l'onde d'appui 38 étant intercalée entre les branches du U.

La partie intérieure 32 définit une surface intérieure 39 située sur une enveloppe cylindrique d'axe A-A'.

La partie extérieure 36 définit également une section en U s'étendant parallèlement à l'axe A-A' et s'ouvrant en regard de la partie inclinée 34.

La partie extérieure 36 de chaque spire est repliée vers la partie intermédiaire 34, vers l'axe central A-A', intérieurement par rapport à la partie inclinée 34. La partie extérieure 36 et l'onde d'appui 38 de la section sont reçus dans la partie intérieure 32 d'une section adjacente, et recouvrent partiellement vers l'extérieur la partie intérieure 32 de la section adjacente.

Pour chaque spire, la partie intermédiaire 34, la partie extérieure 36 et la partie intérieure 32 d'une section adjacente délimitent un interstice intérieur 40, définissant partiellement ou totalement le jeu axial de la carcasse 26.

L'interstice 40 débouche radialement vers l'axe central A-A'. Pour chaque spire, il s'ouvre intérieurement vers l'axe A-A' entre les surfaces intérieures 39 des parties intérieures 32 de deux spires adjacentes.

Il est obturé extérieurement par la partie extérieure 36 et latéralement par la partie intermédiaire 34 d'une spire et par la partie intérieure 32 d'une spire adjacente.

L'interstice 40 s'étend ainsi continûment en forme d'hélice d'axe A-A' suivant un pas P1 le long de la carcasse 26.

Chaque spire de la carcasse 26 présente une largeur avantageusement comprise entre 25 mm et 100 mm.

La carcasse 26 présente, entre chaque paire de spires agrafées, un premier jeu axial défini par la course axiale de coulissement relatif de la partie extérieure 36 d'une spire dans la partie intérieure 32 d'une spire adjacente dans laquelle elle est engagée. Selon l'invention, l'insert 28 est disposé partiellement dans l'interstice 40 et obture l'interstice 40 vers l'axe A-A'.

L'insert 28 présente ainsi avantageusement une forme hélicoïdale d'axe A-A', de pas P1 analogue au pas de l'interstice 40.

Comme illustré par la figure 3, l'insert 28 présente une section, prise dans un plan axial médian, en forme générale de S étendu.

Il comporte une région extérieure axiale 42, une région intermédiaire radiale 44 et une région intérieure axiale 46 faisant saillie à partir de la région intermédiaire 44, axialement à l'opposé et radialement à l'écart de la région extérieure axiale 42,
La région intérieure axiale 46 obture au moins partiellement l'interstice 40. Avantageusement, la région intérieure axiale 46 obture totalement l'interstice 40.

Selon l'invention, l'insert 28 est réalisé d'un seul tenant par pliage d'un deuxième feuillard 48.

Le deuxième feuillard 48 est de préférence métallique. Il présente avantageusement une épaisseur e2 constante. L'épaisseur e2 du deuxième feuillard 48 est de préférence inférieure à l'épaisseur e1 du premier feuillard 31. L'épaisseur e2 du deuxième feuillard 48 est avantageusement comprise entre un tiers et deux tiers de l'épaisseur e1 du premier feuillard 31.

L'épaisseur e2 est par exemple comprise entre 0,5 mm et 2 mm, notamment entre 0,8 mm et 1,5 mm.

Une telle épaisseur garantit une raideur suffisante, tout en limitant le risque de désorganisation lors de l'introduction d'une sonde dans le passage central (« pigging » en anglais).

Dans l'exemple représenté sur la figure 2 et la figure 3, la région extérieure 42 s'étend sur une enveloppe cylindrique d'axe central A-A'.

La région extérieure 42 est pincée entre la branche extérieure du U de la partie extérieure 36 d'une spire de la carcasse 26 et la branche extérieure du U de la partie intérieure 32 d'une spire adjacente de la carcasse 26. Elle s'applique contre la surface intérieure de la partie extérieure 36.

La région extérieure 42 présente un bord libre avantageusement arrondi.

Comme illustre par la figure 3, la région intermédiaire 44 comprend un tronçon extérieur 50 recourbé de liaison avec la région extérieure 42, un tronçon intermédiaire 52 de section linéaire, et un tronçon intérieur 54 recourbé de liaison avec la région intérieure 46.

Le tronçon extérieur 50 présente une courbure de convexité dirigée vers l'extérieur. Le rayon de courbure du tronçon extérieur 50 est supérieur avantageusement à l'épaisseur e2 du deuxième feuillard 48.

Le tronçon intermédiaire 52 s'étend de manière inclinée rapport un axe perpendiculaire à l'axe central A-A' en étant situé axialement à l'écart du tronçon extérieur 42 et du tronçon intérieur 46.

Le tronçon intérieur 54 présente une courbure de convexité dirigée vers l'intérieur, à l'opposé de la convexité de la courbure du tronçon extérieur 50. Il présente un rayon de courbure supérieur de rayon de courbure du tronçon extérieur 50.

La région intermédiaire 44 est plaquée sur une surface intérieure de la partie intermédiaire 34.

Elle est disposée dans l'interstice 40 entre la partie intermédiaire 34 et la partie extérieure 36 d'une spire de la carcasse 26, et la partie intérieure 32 d'une spire adjacente de la carcasse 26.

La région extérieure 42 fait saillie axialement à partir du tronçon extérieur 50 de la région intermédiaire 44.

La région intérieure 46 s'étend également axialement le long de l'axe A-A', sur une enveloppe cylindrique d'axe A-A' ou avec un angle inférieur à 10° par rapport à cette enveloppe.

De préférence, la région intérieure 46 est sollicitée élastiquement vers une position inclinée par rapport à l'enveloppe cylindrique d'axe A-A', dirigée vers l'extérieur, comme représenté en trait fin sur la figure 3, lorsqu'elle est disposée sur une enveloppe cylindrique d'axe A-A'.

La largeur L1 de la région intérieure 46, prise le long de l'axe A-A' est supérieure à la largeur L2 de la région extérieure 42, prise le long de l'axe A-A'.

La région intérieure 46 s'étend axialement à l'opposé de la région extérieure 42 par rapport à la région intermédiaire 44, et à l'écart radialement de celle-ci.

Elle fait saillie à partir du tronçon intérieur 54 de la région intermédiaire 44.

En référence à la figure 3, la région intérieure 46 de chaque spire de l'insert 28 comporte un premier tronçon axial 56 plaqué sur la surface intérieure 39 de la partie intérieure 32 d'une spire de la carcasse 26, un tronçon intermédiaire axial 58 obturant vers l'intérieur l'interstice 40 délimité par la partie intérieure 32, et un deuxième tronçon axial 60 plaqué sur une surface intérieure de la région intérieure 46 d'une spire adjacente de l'insert 28, au niveau du premier tronçon axial 56 de cette région intérieure 46.

La région intérieure 46 de chaque spire de l'insert 28 est avantageusement maintenue plaquée contre la surface intérieure de la région intérieure 46 d'une spire de l'insert 28, par la sollicitation élastique de la région intérieure 46 vers l'extérieur.

Ainsi, les spires successives de l'insert 28 se recouvrent les unes les autres par leurs régions intérieures 46, afin d'obturer l'interstice 40 vers l'intérieur.

La largeur de recouvrement de chaque région intérieure 46, lorsque la carcasse 26 occupe une configuration linéaire non déformée est supérieure au jeu axial de la carcasse 26.

Dans le mode de réalisation représenté sur la figure 4, la région intérieure 46 présente un bord libre 62 arrondi, et une épaisseur constante au voisinage du bord libre arrondi 62.

Dans la variante représentée sur la figure 5, la région intérieure 46 présente un bord libre arrondi 62, et une épaisseur décroissante vers le bord libre 62 au voisinage de celui-ci.

Cette disposition améliore d'écoulement du fluide circulant dans le passage 16.

En référence à la figure 1, la voûte de pression 27 est destinée à reprendre les efforts liés à la pression régnant à l'intérieur de la gaine de pression 20. Elle est par exemple formée d'un fil profilé métallique entouré en hélice autour de la gaine 20. Le fil profilé présente généralement une géométrie complexe, notamment en forme de Z, de T, de U, de K, de X ou de I.

La voûte de pression 27 est enroulée en hélice à pas court autour de la gaine de pression 20, c'est-à-dire avec un angle d'hélice de valeur absolue proche de 90°, typiquement compris entre 75° et 90°.

La conduite flexible 10 selon l'invention comprend au moins une couche d'armures 24, 25 formée d'un enroulement hélicoïdal d'au moins un élément d'armure 63 allongé.

Dans l'exemple représenté sur la figure 1, la conduite flexible 10 comporte une pluralité de couches d'armures 24, 25, notamment une couche d'armures intérieure 24, appliquée sur la voûte de pression 27 et une couche d'armures extérieure 25 autour de laquelle est disposée la gaine extérieure 30.

Chaque couche d'armures 24, 25 comporte des éléments d'armure 63 longitudinaux enroulés à pas long autour de l'axe A-A' de la conduite.

Par « enroulé à pas long », on entend que la valeur absolue de l'angle d'hélice est inférieure à 60°, et est typiquement comprise entre 25° et 55°.

Les éléments d'armure 63 d'une première couche 24 sont enroulés généralement suivant un angle opposé par rapport aux éléments d'armure 63 d'une deuxième couche 25. Ainsi, si l'angle d'enroulement des éléments d'armure 63 de la première couche 24 est égal à + α, α étant compris entre 25° et 55°, l'angle d'enroulement des éléments d'armure 63 de la deuxième couche d'armures 25 disposée au contact de la première couche d'armures 24 est par exemple égal à - α°.

Les éléments d'armure 63 sont par exemple formés par des fils métalliques, notamment des fils en acier, ou par des rubans en matériau composite, par exemple des rubans renforcés de fibres de carbone.

La gaine externe 30 est destinée à empêcher la perméation de fluide depuis l'extérieur de la conduite flexible 10 vers l'intérieur. Elle est avantageusement réalisée en matériau polymère, notamment à base d'un polyoléfine, tel que du polyéthylène, ou à base d'un polyamide, tel que du PA11 ou du PA12

L'épaisseur de la gaine externe 30 est par exemple comprise entre 5 mm et 15 mm.

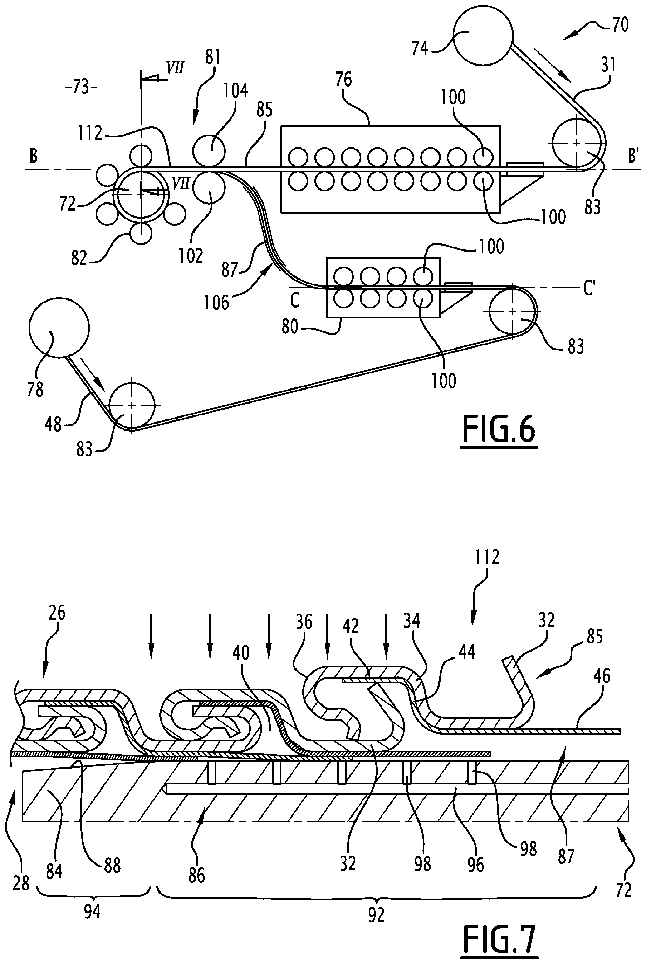

La carcasse 26 et l'insert 28 sont fabriqués et sont mis en place simultanément dans un poste 70 de fabrication et de pose, illustré schématiquement par les figures 6 et 7.

Comme illustré par ces figures, le poste 70 comporte un mandrin 72 rotatif autour d'un axe A-A', destiné à guider l'enroulement de la carcasse 26 et de l'insert 28.

Le poste 70 comporte un support 73 rotatif autour de l'axe A-A' et par rapport au mandrin 72, un premier dérouleur 74 (représenté schématiquement) recevant le premier feuillard 31, et une profileuse de carcasse 76 disposée en aval du premier dérouleur 74 entre le premier dérouleur 74 et le mandrin 72.

Le poste 70 comporte en outre un deuxième dérouleur 78 (représenté schématiquement) recevant le deuxième feuillard 48, une profileuse d'insert 80, disposée en aval du deuxième dérouleur 78 entre le deuxième dérouleur 78 et le mandrin 72.

Avantageusement, le poste 70 comporte un système 81 de réunion des feuillards 31, 48 à leur sortie des profileuses 76, 80.

Le poste 70 comporte en outre des organes 82 de placage radial de la carcasse 26 et de l'insert 28 contre le mandrin 72, et avantageusement, des organes de renvoi 83 pour guider le premier feuillard 31 et le deuxième feuillard 48 à partir de chaque dérouleur 74, 78 vers une profileuse 76, 80 respective.

Le mandrin rotatif 72 fait saillie axialement par rapport au support 73 le long d'un axe A-A' d'enroulement.

En référence à la figure 7, le mandrin 72 comporte un corps 84 d'appui, sur lesquels un premier profil 85 de carcasse, obtenu à partir du premier feuillard 31 déformé dans la profileuse de carcasse 76 et un deuxième profil 87 d'insert, obtenu à partir du deuxième feuillard 48 déformé dans la profileuse d'insert 80 sont appliqués.

Dans cet exemple, le mandrin rotatif 72 comporte en outre un ensemble 86 de lubrification de la surface extérieure 88 du corps 84.

Le corps d'appui 84 présente par exemple un revêtement de surface approprié pour diminuer son coefficient de frottement. Le coefficient de frottement de la surface extérieure 88 par rapport à l'insert 28 est par exemple inférieur à 0,1 en présence de lubrification.

Le corps d'appui 84 présente une région amont 92 sensiblement cylindrique d'assemblage de l'insert 28 et de la carcasse 26 à partir des profils 85, 87 et une région aval tronconique 94 de dégagement de l'insert 28 et de la carcasse 26.

L'ensemble de lubrification 86 comporte un canal central 96 d'injection de lubrifiant ménagé dans le corps d'appui 84. Le canal 96 débouche par des ouvertures transversales 98 dans la région amont 92.

Le mandrin rotatif 72 est propre à être entraîné en rotation autour de l'axe A-A' avec une vitesse et un sens de rotation différents de ceux du support 73.

Avantageusement, le mandrin 72 est entraîné en rotation dans un sens opposé à celui du support 73, et avec une vitesse inférieure à 10 % de celle du support 73.

Ceci autorise un dégagement rapide de l'insert 28 formé en appui sur la surface 88, et évite les problèmes de grippage ou de coincement de la carcasse 26 sur le mandrin 72.

La rotation du mandrin rotatif 72 tend à augmenter localement le diamètre interne de la carcasse 26 pour favoriser son évacuation.

Le support 73 comporte par exemple un plateau entraîné en rotation autour de l'axe A-A' dans le sens d'enroulement de l'insert 28 et de la carcasse 26.

Le support 73 porte les dérouleurs 74, 78, et les profileuses 76, 80. Dans cet exemple, les profileuses 76, 80 sont disposées diamétralement du même côté par rapport à un plan axial médian passant par l'axe A-A'.

Les profileuses 76, 80 sont par exemple situées l'une sur l'autre.

Chaque profileuse 76, 80 comporte une pluralité de paires de galets 100 de déformation du feuillard 31, 48, qui définissent un axe B-B', C-C' respectif d'alimentation respectivement de la carcasse 26 et de l'insert 28 sur le mandrin 72.

Les profileuses 76, 80 sont mobiles en translation sur le support 73 dans un plan perpendiculaire à l'axe A-A' d'enroulement. La profileuse d'insert 80 est apte à être pivotée autour de son axe C-C' pour régler l'angle d'introduction du profil d'insert 87 dans le système de réunion 81.

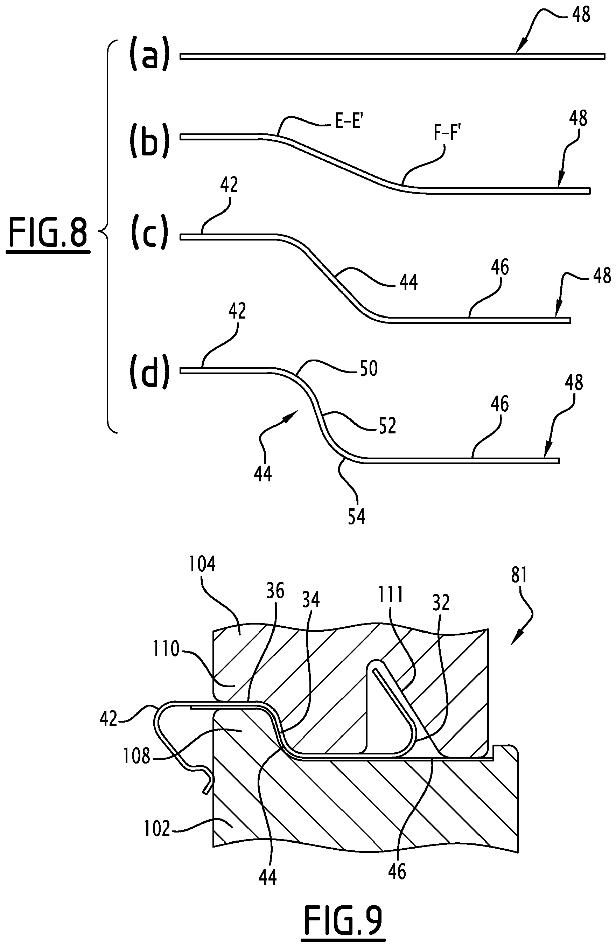

En référence à la figure 9, le système de réunion 81 comporte deux galets guides 102, 104 placés en regard de l'autre et avantageusement, un guide profil 106, visible sur la figure 6, interposé entre la profileuse d'insert 80 les galets guides 102,104. Le guide profil 10 comporte des moyens de guidage de l'insert 28 entre d'une part l'aval de la profileuse d'insert 80 et d'autre part les deux galets guides 102,104.

Ces moyens de guidage épousent la géométrie de l'insert 28 et comportent un ensemble de galets de guidage et/ou une ou plusieurs rampes de guidage présentant un faible coefficient de frottement.

Comme visible sur la figure 9, le galet guide intérieur 102 présente un relief 108 délimitant une surface extérieure de forme conjuguée à la surface intérieure du premier profil d'insert 87, en regard de la région extérieure 42, de la région intermédiaire 44 et de la région intérieure 46.

Le galet guide extérieur 104 présente un relief complémentaire 110 de forme conjuguée à celle du relief 108, et à celle de la surface extérieure du profil de carcasse 85, sur la partie extérieure 36, sur la partie intermédiaire 34, et sur la branche intérieure de la partie intérieure 32.

Le galet guide extérieur 104 délimite un logement 111 d'accommodation de la branche extérieure du U de la partie intérieure 32.

Les galets 102, 104 délimitent entre les reliefs 108, 110, un espace intermédiaire d'épaisseur correspondant sensiblement à la somme des épaisseurs du premier feuillard 31 et du deuxième feuillard 48.

Comme on le verra plus bas, les galets guides 102, 104 sont propres à plaquer le deuxième profil 87 sur le premier profil 85 pour former un profil combiné 112, visible sur les figures 6 et 7, puis à pousser le profil combiné 112 vers le mandrin 72, à l'aide d'une motorisation en « fil poussé ».

Les organes de placage radial 82 sont disposés radialement autour de la surface 88. Ils comportent par exemple des molettes propres à s'appliquer radialement à l'extérieur de l'insert 28 et de la carcasse 26 pour finaliser la disposition de l'insert 28 dans l'interstice hélicoïdal 40, et l'agrafage de la carcasse 26, comme représenté sur la figure 7.

Dans une variante, pour faciliter le dégagement de l'insert 28 et de la carcasse 26 à l'écart du mandrin 72, les organes de placage radial 82 situé sur le mandrin 72 sont aptes à fermer uniquement partiellement la carcasse 26. Un mandrin spécifique (non représenté), associé à des organes de placage additionnel est alors prévu en aval du mandrin 72.

Un procédé de fabrication de la conduite flexible 10 va maintenant être décrit. Initialement, les feuillards 31, 48 sont chargés sur les dérouleurs 74, 78.

Puis, les feuillards 31, 48 sont déroulés pour être introduits respectivement dans les profileuses 76, 80. Simultanément, le support 73 est entraîné en rotation autour de l'axe A-A'.

Dans la profileuse de carcasse 76, le premier feuillard 31 se déforme successivement pour réaliser le premier profil 85 comportant la partie intérieure 32, la partie intermédiaire 34 et la partie extérieure 36, sans refermer totalement la partie intérieure 32 et la partie extérieure 36, comme illustré par les figures 7 et 9.

En particulier, la branche intérieure du U de la partie extérieure 36 reste partiellement ouverte, de même que la branche extérieure du U de la partie intérieure 32.

Dans la profileuse d'insert 80, comme illustré par la figure 8, le deuxième feuillard 48 est déformé et plié le long d'axes intermédiaires E-E', F-F' situés de part et d'autre de l'axe central du feuillard 48 pour former la région extérieure 42, la région intermédiaire 44, et la région intérieure 46 (étapes (a) à (c) sur la figure 8). La déformation se poursuit en en incurvant des tronçons de liaison 50, 54 (étapes (d) sur la figure 8).

Un deuxième profil 87 de section en S étendu comprenant une région extérieure 42 axiale, une région intérieure 46 axiale opposée à la région extérieure axiale 42 et une région radiale 44 intermédiaire est alors obtenu, pour former l'insert 28.

Le deuxième profil 87 est ensuite réuni avec le premier profil 85 dans le système de réunion 81, en étant guidé vers le système de réunion 81 par le guide profil 106.

Dans le système 81, le premier profil 85 est plaqué contre le deuxième profil 87 entre les reliefs 108, 110.

La région extérieure 42 s'applique contre la branche extérieure du U de la partie extérieure 36, la branche intérieure restant disposée à l'extérieur des galets 102, 104.

La région intermédiaire 44 s'applique contre la partie intermédiaire 34.

La région intérieure 46 applique contre la branche intérieure du U de la partie intérieure 32, la branche extérieure du U de la partie intérieure 32 s'introduisant dans le logement 111.

Un profil combiné 112 est ainsi obtenu et est alimenté en « fil poussé » à travers le système de réunion 81, en étant orienté tangentiellement par rapport à la surface extérieure 88 du mandrin 72.

Le profil combiné 112 se plaque sur la surface extérieure 88 du corps 84 et s'enroule en hélice, au pas souhaité pour l'insertion dans l'interstice 40, formant ainsi l'insert 28 et la carcasse 26.

Simultanément, la partie extérieure 36 partiellement ouverte de chaque spire du premier profil 85 s'insère dans la partie intérieure 32 d'une spire adjacente, la région extérieure 42 de l'insert 28 étant intercalée entre la partie extérieure 36 de la spire et la partie intérieure 32 de la spire adjacente.

Par ailleurs, la région intérieure 46 de chaque spire du deuxième profil 87 s'applique sur la région intérieure 46 d'une spire adjacente pour obturer l'interstice 40 en formation.

Les organes de placage radial 82 sont alors appliqués à l'extérieur de la carcasse 26 et de l'insert 28 pour refermer et agrafer la carcasse 26, tout en assurant le calage interne de l'insert 28 dans l'interstice hélicoïdal 40.

Les spires ainsi formées de la carcasse 26 et de l'insert 28 se dégagent progressivement vers l'aval, en se détachant du mandrin 72 sous l'effet de la lubrification apportée par l'ensemble de lubrification 86, de la forme tronconique de la partie aval 94 du corps 84, et du différentiel de rotation entre le support 73 et le mandrin 72 tendant à gonfler la carcasse 26.

Une fois la carcasse 26 réalisée, et l'insert 28 disposé dans la carcasse 26, la gaine interne 20 est formée autour de la carcasse 26, par exemple par extrusion. La voûte de pression 27 et les couches d'armures 24, 25 sont alors enroulées autour de la gaine interne 20.

La gaine externe 30 est ensuite réalisée avantageusement par extrusion, en étant disposée à l'extérieur des couches d'armures 24, 25.

Dans une variante, au moins un conduit 120 de passage de fluide raccordant l'interstice 40 au passage de circulation 16 est ménagé dans l'insert 28.

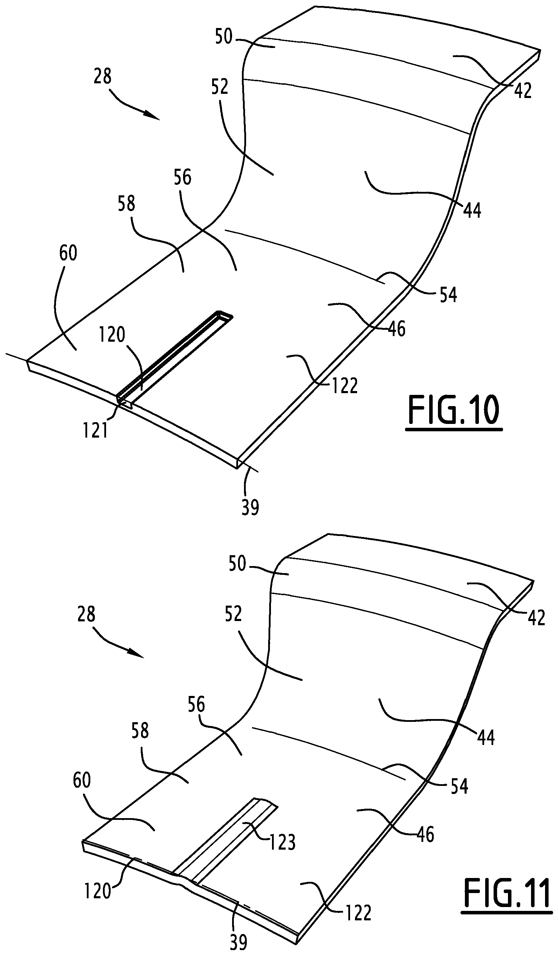

Dans l'exemple représenté sur les figures 10 et 11, au moins un conduit 120 est formé axialement dans la région intérieure 46 au moins le long du deuxième tronçon axial 60.

Dans la région intérieure 46, le conduit 120 s'étend axialement depuis l'interstice 40 vers le bord libre.

La première extrémité de ce conduit 120, située du côté de bord libre de la région intérieure 46 de l'insert 28, débouche directement dans le passage de circulation 16 de la conduite 10. L'autre extrémité du conduit 120 est située dans le tronçon intermédiaire axial 58 de sorte qu'elle débouche directement dans l'interstice hélicoïdal 40 de la carcasse 26. Le conduit 120 permet donc la circulation de fluides entre d'une part l'interstice 40 et d'autre part le passage de circulation 16.

Ainsi, grâce au conduit 120, l'ensemble intérieur formé par la carcasse 26 et l'insert 28 est perméable au passage de fluide depuis l'intérieur de la carcasse 26 vers le passage de circulation 16 de la conduite 10. Cette caractéristique évite d'endommager l'insert 28 lorsque la conduite 10 transporte un fluide sous forte pression, notamment un gaz, et qu'elle doit être dépressurisée ou pressurisée rapidement.

En effet, une différence importante de pression entre les faces interne et externe de l'insert 28 pourrait endommager irréversiblement l'insert 28. Il est donc avantageux d'équilibrer les pressions de part et d'autre de l'insert 28 en facilitant l'écoulement de fluide entre l'interstice 40 et le passage 16. Le conduit 120 réduit les pertes de charge de cet écoulement, ce qui limite la différence de pression entre les faces interne et externe de l'insert 28, et ceci même lorsque la conduite est dépressurisée ou pressurisée rapidement.

Dans l'exemple représenté sur la figure 10, le conduit 120 est délimité par une empreinte 121 axiale ménagée dans la surface extérieure 122 de la région intérieure 46 disposée en appui sur la surface intérieure 39 de la partie intérieure 32.

La profondeur de l'empreinte 121 est avantageusement comprise entre 10% et 30% de l'épaisseur e2 du deuxième feuillard 48. La largeur de l'empreinte 121, mesurée perpendiculairement à l'axe longitudinal du canal 120, est avantageusement comprise entre une fois et trois fois l'épaisseur e2 du deuxième feuillard 48.

Afin de faciliter l'écoulement des fluides de part et d'autre de l'insert 28 sur toute la longueur de la conduite 10, il est avantageux de disposer un grand nombre d'empreintes 121 tout le long de l'insert 28. Avantageusement, l'insert comporte au moins une empreinte 121 par mètre linéaire d'insert 28, préférentiellement au moins une empreinte 121 par décimètre linéaire d'insert 28. Pour les applications très sévères de transport de gaz sous forte pression, l'insert 28 peut comporter jusqu'à une empreinte 121 par centimètre linéaire d'insert 28.

Ces empreintes sont avantageusement fabriquées en même temps que l'insert 28 par le poste de fabrication 70.

A cet effet, la profileuse d'insert 80 est équipée d'une pluralité de paires de galets 100 dont au moins une, avantageusement celle située la plus en aval, comprend un galet muni de bossages en relief destinés à écraser localement le deuxième feuillard 48 pour générer les empreintes 121. La distance séparant deux empreintes 121 voisines le long de l'insert 28 dépend du diamètre de ce galet, ainsi que du nombre et de la position angulaire des bossages dont il est muni.

Dans la variante représentée sur la figure 11, le conduit 120 est délimité par un relief en forme d'onde 123 disposé en appui sur la surface intérieure 39, pour écarter au moins partiellement la surface extérieure 122 de la surface intérieure 39.

La profondeur de l'empreinte 121 et/ou du relief en forme d'onde 123 est avantageusement comprise entre 0,1 mm et 0,3 mm. Le nombre d'empreintes 121 et/ou de reliefs en forme d'onde 123 est compris par exemple entre 3 et 9 par spire.

Selon des variantes non représentées sur les figures, la région extérieure 42 de l'insert 28 est elle aussi équipée d'un ou plusieurs conduits similaires au conduit 120, ce ou ces conduits s'étendant axialement depuis le bord libre de la région extérieure 42 et en direction de l'interstice 40. Ce ou ces conduits additionnels sont ménagés dans la surface intérieure de la région extérieure 42, de sorte qu'ils débouchent directement dans l'interstice 40.

Ainsi, l'ensemble intérieur formé par la carcasse 26 et l'insert 28 est perméable au passage de fluide depuis l'intérieur de la carcasse 26 vers l'extérieur de la carcasse 26.

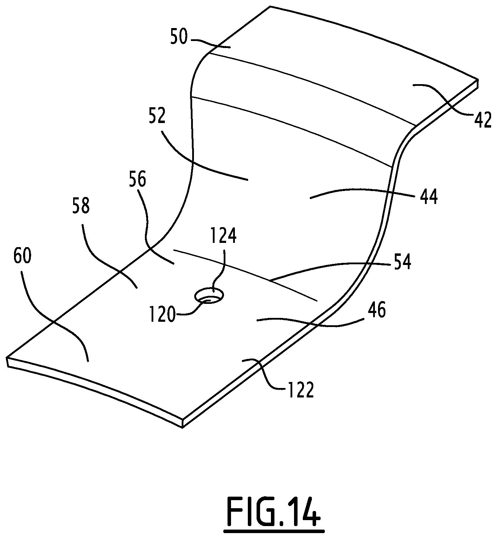

Dans la variante représentée sur la figure 14, le conduit 120 consiste en un trou 124 traversant de part en part le deuxième feuillard 48 au niveau du tronçon intermédiaire axial 58 de sorte que ce trou 124 débouche directement dans un interstice hélicoïdal 40 de la carcasse 26.

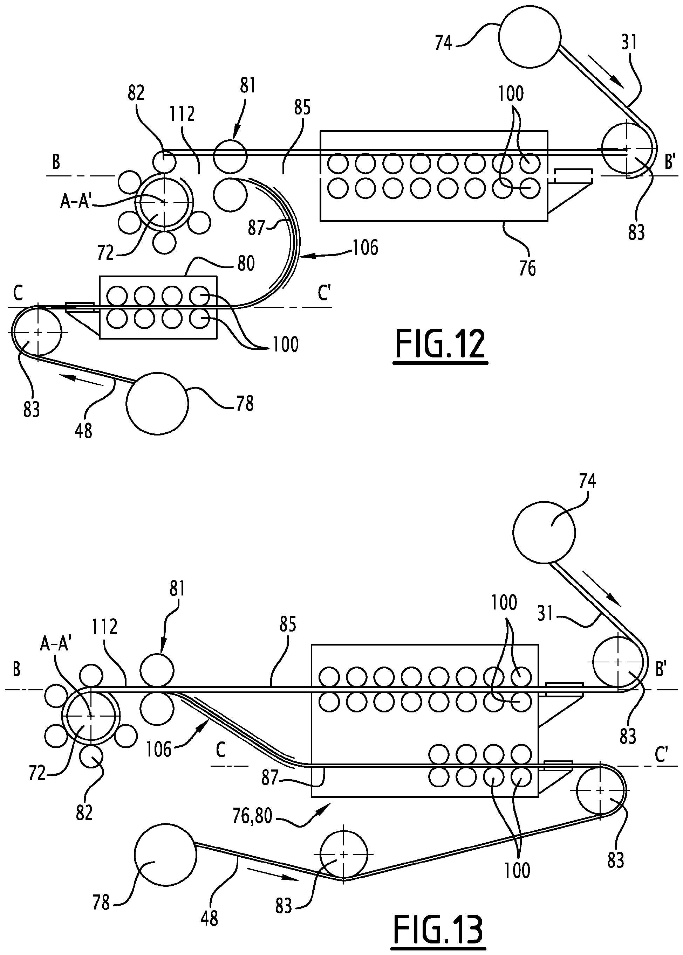

La figure 12 illustre une variante de poste 70 de fabrication et de pose. Dans cet exemple, les profileuses 76, 80 sont disposées diamétralement à l'opposé l'une de l'autre, de part et d'autre d'un plan axial médian passant par l'axe A-A'.

La figure 13 illustre une autre variante de poste 70 de fabrication et de pose. Dans cet exemple, les profileuses 76, 80 sont combinées sur une profileuse double comportant deux trains de galets 100 de profilage superposés.

Comme indiqué plus haut, l'ensemble intérieur perméable formé par la carcasse 26 et l'insert 28 permet l'équilibrage des pressions de part et d'autre de cet ensemble. Une telle configuration est donc totalement opposée à celle d'un tuyau métallique totalement étanche tel que décrit dans US 2002/195157 qui vise à contenir un fluide à l'intérieur du tuyau sans fuite de fluide.

## Revendications

1. Conduite flexible (10) de transport de fluide, comprenant :
- une gaine interne (20) en polymère délimitant un passage (16) de circulation de fluide d'axe central (A-A') ;
- au moins une couche d'armures (24, 25) disposée à l'extérieur de la gaine interne (20) ;
- une carcasse interne (26), propre à entrer en contact avec le fluide circulant dans la gaine de pression (20), la carcasse interne (26) étant disposée dans la gaine interne (20), la carcasse interne (26) comprenant un premier feuillard (31) plié délimitant un interstice (40) hélicoïdal débouchant vers l'axe central (A-A') ;
- un insert (28) hélicoïdal obturant vers l'intérieur l'interstice hélicoïdal (40) ; où l'insert hélicoïdal (28) est disposé partiellement dans l'interstice hélicoïdal (40) et obture l'interstice hélicoïdal (40) vers l'axe central (A-A'),
l'insert hélicoïdal (28) présentant une section en forme de S étendu, prise dans un plan axial médian, la section en forme de S étendu comportant une région extérieure axiale (42), une région intermédiaire radiale (44) et une région intérieure axiale (46) faisant saillie à partir de la région intermédiaire radiale (44) axialement à l'opposé et radialement à l'écart de la région extérieure axiale (42), la région intérieure axiale (46) obturant au moins partiellement l'interstice hélicoïdal (40),
et où l'ensemble intérieur formé par la carcasse (26) et par l'insert (28) est perméable au passage du fluide depuis l'intérieur de la carcasse (26) vers l'extérieur de la carcasse (26).

2. Conduite selon la revendication 1, **caractérisée en ce que** la région intermédiaire radiale (44) est inclinée par rapport un axe perpendiculaire à l'axe central (A-A'), en s'écartant axialement de la région intérieure axiale (46).

3. Conduite (10) selon la revendication 1 ou 2, **caractérisée en ce que** la région intermédiaire radiale (44) comprend, en section, un tronçon intermédiaire linéaire (52), un tronçon extérieur de liaison (50) recourbé, la région extérieure axiale (42) faisant saillie à partir du tronçon extérieur de liaison (50), et un tronçon intérieur de liaison (54) recourbé, de courbure opposée à celle du tronçon extérieur de liaison (50), la région intérieure axiale (46) faisant saillie à partir du tronçon intérieur de liaison (54).

4. Conduite (10) selon l'une quelconque des revendications précédentes, **caractérisée en ce que** la région intérieure axiale (46) présente une largeur axiale supérieure à celle de la région extérieure axiale (42).

5. Conduite (10) selon l'une quelconque des revendications précédentes, **caractérisée en ce que** la région intérieure axiale (46) présente un bord libre (62) arrondi et/ou une région amincie au voisinage du bord libre (62).

6. Conduite (10) selon l'une quelconque des revendications précédentes, **caractérisée en ce que** la région intérieure axiale (46) s'étend sensiblement parallèlement à la région extérieure axiale (42).

7. Conduite (10) selon l'une quelconque des revendications précédentes, **caractérisée en ce que** l'insert hélicoïdal (28) comporte une pluralité de spires, chaque spire de l'insert hélicoïdal (28) comportant une section, prise dans un plan axial médian, comportant une région intérieure axiale (46), une région intermédiaire radiale (44) et une région extérieure axiale (42) faisant saillie à partir de la région intermédiaire radiale (44) axialement à l'opposé et radialement à l'écart de la région intérieure axiale (46), la région intérieure axiale (46) d'une première spire étant appliquée intérieurement sur la région intérieure axiale (46) d'une deuxième spire adjacente à la première spire.

8. Conduite (10) selon l'une quelconque des revendications précédentes, **caractérisée en ce que** la carcasse (26) comporte une pluralité de spires agrafées, chaque spire de la carcasse (26) présentant une partie intérieure (32), une partie intermédiaire (34), la partie intérieure (32) présentant une forme de U replié vers la partie intermédiaire (34) et une partie extérieure (36), la partie extérieure (36) présentant une forme de U replié vers la partie intermédiaire (34),
la région extérieure axiale (42) de chaque spire de l'insert hélicoïdal (28) étant pincée entre la partie intérieure (32) d'une première spire de la carcasse (26) et la partie extérieure (36) d'une deuxième spire de la carcasse (26) engagée dans la première spire de la carcasse (26),
la région intermédiaire radiale (44) étant optionnellement plaquée contre la partie intermédiaire (34), la région intérieure (46) faisant avantageusement saillie axialement au-delà de la partie intérieure (32).

9. Conduite (10) selon l'une quelconque des revendications précédentes, **caractérisé en ce que** l'insert hélicoïdal (28) délimite au moins un conduit (120) de passage de fluide raccordant l'interstice (40) au passage de circulation (16), le conduit étant avantageusement délimité par une empreinte et/ou un relief présent dans la région extérieure (42) et/ou dans la région intérieure (46).

10. Conduite (10) selon l'une quelconque des revendications précédentes dans laquelle le premier feuillard délimite une pluralité des spires agrafées.

11. Conduite (10) selon l'une quelconque des revendications précédentes dans laquelle la région intermédiaire radiale (44) de l'insert (28) est disposée dans l'interstice hélicoïdal (40).

12. Procédé de fabrication d'une conduite flexible (10), comprenant les étapes suivantes :
- formation d'une carcasse interne (26) propre à entrer en contact avec le fluide circulant dans la gaine de pression (20), la carcasse interne (26) comprenant un premier feuillard (31) plié délimitant un interstice hélicoïdal (40) débouchant vers l'axe central (A-A') ;
- réalisation d'une gaine interne (20) en polymère délimitant un passage (16) de circulation de fluide d'axe central (A-A'), la carcasse interne (26) étant disposée dans la gaine interne (20) ;
- disposition d'au moins une couche d'armures (24, 25) externe à l'extérieur de la gaine interne (20) ;
le procédé comportant la mise en place d'un insert (28) hélicoïdal dans l'interstice hélicoïdal (40),
**caractérisé en ce que** l'insert hélicoïdal (28) est disposé partiellement dans l'interstice hélicoïdal (40) et obture l'interstice hélicoïdal (40) vers l'axe central (A-A'),
l'insert hélicoïdal (28) présentant une section en forme de S étendu, prise dans un plan axial médian, la section en forme de S étendu comportant une région extérieure axiale (42), une région intermédiaire radiale (44) et une région intérieure axiale (46) faisant saillie à partir de la région intermédiaire radiale (44) axialement à l'opposé et radialement à l'écart de la région extérieure axiale (42), la région intérieure axiale (46) obturant au moins partiellement l'interstice hélicoïdal (40),
et **en ce que** l'ensemble intérieur formé par la carcasse (26) et par l'insert (28) est perméable au passage du fluide depuis l'intérieur de la carcasse (26) vers l'extérieur de la carcasse (26).

13. Procédé selon la revendication 12, **caractérisé en ce qu'**il comporte le passage d'un deuxième feuillard (48) dans une profileuse d'insert (80) pour former un profil d'insert (87) de section en forme de S étendu, le procédé comportant le passage du premier feuillard (31) dans une profileuse de carcasse (76) pour former un profil de carcasse (85) et l'enroulement du profil de carcasse (85) et du profil d'insert (87) sur le mandrin (72),
la profileuse d'insert (80) et la profileuse de carcasse (76) étant optionnellement disposées d'un même côté du mandrin (72) ou de part et d'autre du mandrin (72).

14. Procédé selon la revendication 13, **caractérisé en ce qu'**il comporte, en aval de la profileuse d'insert (80) et de la profileuse de carcasse (76), et en amont du mandrin (72) une étape de placage du profil d'insert (87) contre le profil de carcasse (85) pour former un profil combiné (112) enroulé sur le mandrin (72),
le profil combiné (112) étant optionnellement poussé sur le mandrin (72) après l'étape de placage.

## Patentansprüche

1. Flexible Rohrleitung (10) zum Fluidtransport, aufweisend:
- eine innere Hülle (20) aus Polymer, die eine Passage (16) zur Zirkulation von Fluid begrenzt, die eine zentrale Achse (A-A') hat,
- wenigstens eine Schicht Bewehrungen (24, 25), die am Äußeren der inneren Hülle (20) angeordnet ist,
- eine innere Karkasse (26), die imstande ist, in Kontakt mit dem Fluid zu treten, das in der Druckhülle (20) zirkuliert, wobei die innere Karkasse (26) in der inneren Hülle (20) angeordnet ist, wobei die innere Karkasse (26) ein erstes, gefalztes Stahlband (31) aufweist, das einen wendelförmigen Zwischenraum (40) begrenzt, der zu der zentralen Achse (A-A') hin ausmündet,
- einen wendelförmigen Einsatz (28), der den wendelförmigen Zwischenraum (40) zu dem Inneren hin verschließt,
wobei der wendelförmigen Einsatz (28) teilweise in dem wendelförmigen Zwischenraum (40) angeordnet ist und den wendelförmigen Zwischenraum (40) zu der zentralen Achse (A-A') hin verschließt,
wobei der wendelförmige Einsatz (28) einen Querschnitt, genommen in einer axialen Mittelebene, in langgestreckter S-Form hat, wobei der Querschnitt in langgestreckter S-Form einen äußeren axialen Bereich (42), einen radialen Zwischenbereich (44) und einen inneren axialen Bereich (46) hat, der ausgehend von dem radialen Zwischenbereich (44) axial entgegengesetzt zu und radial im Abstand zu dem äußeren axialen Bereich (40) vorsteht, wobei der innere axiale Bereich (46) den wendelförmigen Zwischenraum (40) zumindest teilweise verschließt,
und wobei die innere Einrichtung, die von der Karkasse (26) und von dem Einsatz (28) gebildet ist, durchlässig ist für die Passage des Fluid von dem Inneren der Karkasse (26) aus zu dem Äußeren der Karkasse (26) hin.

2. Rohrleitung gemäß Anspruch 1, **dadurch gekennzeichnet, dass** der radiale Zwischenbereich (44) bezüglich einer Achse geneigt ist, die zu der zentralen Achse (A-A') senkrecht ist, unter sich axial Entfernen von dem inneren axialen Zwischenabschnitt (46) .

3. Rohrleitung (10) gemäß Anspruch 1 oder 2, **dadurch gekennzeichnet, dass** der radiale Zwischenbereich (44) im Querschnitt aufweist einen linearen Zwischenabschnitt (52), einen gekrümmten äußeren Verbindungabschnitt (50), wobei der äußere axiale Abschnitt (42) ausgehend von dem äußeren Verbindungsabschnitt (50) vorsteht, und einen gekrümmten inneren Verbindungsabschnitt (54) mit einer Krümmung, die zu jener des äußeren Verbindungsabschnitts (50) entgegengesetzt ist, wobei der innere axiale Abschnitt (46) von dem inneren Verbindungsabschnitt (54) aus vorsteht.

4. Rohrleitung (10) gemäß irgendeinem der vorhergehenden Ansprüche, **dadurch gekennzeichnet, dass** der innere axiale Bereich (46) eine axiale Weite hat, die größer ist als jene des äußeren axialen Bereichs (42).

5. Rohrleitung (10) gemäß irgendeinem der vorhergehenden Ansprüche, **dadurch gekennzeichnet, dass** der innere axiale Bereich (46) einen gerundeten freien Rand (62) und/oder einen verjüngten Bereich benachbart zu dem freien Rand (62) hat.

6. Rohrleitung (10) gemäß irgendeinem der vorhergehenden Ansprüche, **dadurch gekennzeichnet, dass** der innere axiale Bereich (46) sich im Wesentlichen parallel zu dem äußeren axialen Bereich (42) erstreckt.

7. Rohrleitung (10) gemäß irgendeinem der vorhergehenden Ansprüche, **dadurch gekennzeichnet, dass** der wendelförmige Einsatz (28) eine Mehrzahl von Windungen aufweist, wobei jede Windung des wendelförmigen Einsatzes (28) einen Querschnitt aufweist, genommen in einer axialen Mittelebene, der einen inneren axialen Bereich (46), einen radialen Zwischenbereich (44) und einen äußeren axialen Bereich (42) aufweist, der ausgehend von dem radialen Zwischenbereich (44) axial entgegengesetzt zu und radial im Abstand zu dem inneren axialen Bereich (46) vorsteht, wobei der innere axiale Bereich (46) einer ersten Windung innen an dem inneren axialen Bereich (46) einer zweiten Windung anliegt, die zu der ersten Windung benachbart ist.

8. Rohrleitung (10) gemäß irgendeinem der vorhergehenden Ansprüche, **dadurch gekennzeichnet, dass** die Karkasse (26) eine Mehrzahl von zusammengefalzten Windungen aufweist, wobei jede Windung der Karkasse (26) aufweist einen inneren Abschnitt (32), einen Zwischenabschnitt (34), wobei der innere Abschnitt (32) eine zu dem Zwischenabschnitt (34) hin umgeschlagene U-Form hat, und einen äußeren Abschnitt (36), wobei der äußere Abschnitt (36) eine zu dem Zwischenabschnitt (34) hin umgeschlagene U-Form hat,
wobei der äußere axiale Bereich (42) jeder Windung des wendelförmigen Einsatzes (28) zwischen dem inneren Abschnitt (32) einer ersten Windung der Karkasse (26) und dem äußeren Abschnitt (36) einer zweiten Windung der Karkasse (26) eingeklemmt ist, die mit der ersten Windung der Karkasse (26) im Eingriff ist.

9. Rohrleitung (10) gemäß irgendeinem der vorhergehenden Ansprüche, **dadurch gekennzeichnet, dass** der wendelförmige Einsatz (28) wenigstens einen Kanal (120) zur Passage von Fluid begrenzt, welcher den Zwischenraum (40) mit der Zirkulations-Passage (16) verbindet, wobei der Kanal vorzugsweise begrenzt ist durch eine Vertiefung und/oder ein Relief, das in dem äußeren Bereich (42) und/oder in dem inneren Bereich (46) vorliegt.

10. Rohrleitung (10) gemäß irgendeinem der vorhergehenden Ansprüche, wobei das erste Stahlband eine Mehrzahl von zusammengefalzten Windungen begrenzt.

11. Rohrleitung (10) gemäß irgendeinem der vorhergehenden Ansprüche, wobei der radiale Zwischenbereich (44) des Einsatzes (28) in dem wendelförmigen Zwischenraum (40) angeordnet ist.

12. Verfahren zur Herstellung einer flexiblen Rohrleitung (10), aufweisend die folgenden Schritte:
- Bilden einer inneren Karkasse (26), die imstande ist, mit dem Fluid, das in der Druckhülle (20) zirkuliert, in Kontakt zu treten, wobei die innere Karkasse (26) ein erstes gefalztes Stahlband (31) aufweist, das einen wendelförmigen Zwischenraum (40) begrenzt, der zu der zentralen Achse (A-A') hin ausmündet,
- Realisieren einer inneren Hülle (20) aus Polymer, die eine Passage (16) zur Zirkulation von Fluid begrenzt, die eine zentrale Achse (A-A') hat, wobei die innere Karkasse (26) in der inneren Hülle (20) angeordnet ist,
- Anordnen wenigstens einer äußeren Schicht Bewehrungen (24, 25) am Äußeren der inneren Hülle (20),
wobei das Verfahren aufweist das Platzieren eines wendelförmigen Einsatzes (28) in dem wendelförmigen Zwischenraum (40),
**dadurch gekennzeichnet, dass** der wendelförmige Zwischenraum (28) teilweise in dem wendelförmigen Zwischenraum (40) angeordnet ist und einen wendelförmigen Zwischenraum (40) zu der zentralen Achse (A-A') hin verschließt,
wobei der wendelförmige Einsatz (28) einen Querschnitt, genommen in einer axialen Mittelebene, in einer langgestreckten S-Form hat, wobei der Querschnitt in langgestreckter S-Form aufweist einen äußeren axialen Bereich (42), einen radialen Zwischenbereich (44) und einen inneren axialen Bereich (46), der ausgehend von dem radialen Zwischenbereich (44) axial entgegengesetzt zu und im radialen Abstand zu dem äußeren axialen Bereich (42) vorsteht, wobei der innere axiale Bereich (46) den wendelförmigen Zwischenraum (40) wenigstens teilweise verschließt,
und dass die innere Einrichtung, die von der Karkasse (26) und von dem Einsatz (28) gebildet wird, durchlässig ist für die Passage des Fluid von dem Inneren der Karkasse (26) aus zu dem Äußeren der Karkasse (26) hin.

13. Verfahren gemäß Anspruch 12, **dadurch gekennzeichnet, dass** es aufweist das Passieren eines zweiten Stahlbands (48) durch eine Einsatz-Profilgebungseinrichtung (80) zum Bilden eines Einsatz-Profils (87) mit einem Querschnitt in langgestreckter S-Form, wobei das Verfahren aufweist das Passieren des ersten Stahlbands (31) durch eine Karkasse-Profilgebungseinrichtung (76) zum Bilden eines Karkassen-Profils (85) und das Wickeln des Karkassen-Profils (85) und des Einsatz-Profils (87) auf den Dorn (72),
wobei die Einsatz-Profilgebungseinrichtung (80) und die Karkasse-Profilgebungseinrichtung (76) optional auf der gleichen Seite des Dorns (72) oder beidseitig des Dorns (72) angeordnet sind.

14. Verfahren gemäß Anspruch 13, **dadurch gekennzeichnet, dass** es aufweist, stromabwärts der Einsatz-Profilgebungseinrichtung (80) und der Karkasse-Profilgebungseinrichtung (76), und stromaufwärts des Dorns (72) einen Schritt des Platzierens des Einsatz-Profils (87) gegen das Karkassen-Profil (85) zum Bilden eines kombinierten Profils (112), das auf den Dorn (72) aufgerollt wird,
wobei das kombinierte Profil (112) optional nach dem Platzieren-Schritt auf den Dorn (72) geschoben wird.

## Claims

1. A flexible pipe (10) for transporting a fluid, comprising:
- an internal polymeric sheath (20) delimiting a passage (16) for circulation of fluid with a central axis(A-A');
- at least one layer of armors (24, 25) positioned outside the internal sheath (20);
- an internal carcass (26), able to come into contact with the fluid circulating in the internal sheath (20), the internal carcass (26) being positioned in the internal sheath (20), the internal carcass (26) comprising a first bent tape (31) delimiting a helicoidal gap (40) opening towards the central axis (A-A');
- a helicoidal insert (28) obturating inwards the helicoidal gap (40);
wherein the helicoidal insert (28) is partly positioned in the helicoidal gap (40) and obturates the helicoidal gap (40) towards the central axis (A-A'),
the helicoidal insert (28) having a lazy-S-shaped section taken in a axial midplane, the lazy-S-shaped section including an axial outer region (42), a radial intermediate region (44) and an axial inner region (46) protruding from the radial intermediate region (44) axially opposite to and radially away from the axial outer region (42), the axial inner region (46) obturating at least partly the helicoidal gap (40),
and wherein the inner assembly formed by the carcass (26) and by the insert (28) is permeable to the passing of the fluid from the inside of the carcass (26) to the outside of the carcass (26).

2. The pipe according to claim 1, **characterized in that** the radial intermediate region (44) is tilted relatively to an axis perpendicular to the central axis (A-A'), axially away from the axial inner region (46).

3. The pipe (10) according to claim 1 or 2, **characterized in that** the radial intermediate region (44) comprises, in section, a linear intermediate segment (52), a curved connecting outer segment (50), the axial outer region (42) protruding from the connecting outer segment (50), and a curved connecting inner segment (54), with curvature opposite to that of the connecting outer segment (50), the axial inner region (46) protruding from the connecting inner segment (54).

4. The pipe (10) according to any of the preceding claims, **characterized in that** the axial inner region (46) has an axial width greater than that of the axial outer region (42).

5. The pipe (10) according to any of the preceding claims, **characterized in that** the axial inner region (46) has a rounded free edge (62) and/or a thinned region in the vicinity of the free edge (62).

6. The pipe (10) according to any of the preceding claims, **characterized in that** the axial inner region (46) extends substantially parallel to the axial outer region (42).

7. The pipe (10) according to any of the preceding claims, **characterized in that** the helicoidal insert (28) includes a plurality of turns, each turn of the helicoidal insert (28) including a section, taken in an axial midplane, including an axial inner region (46), a radial intermediate region (44) and an axial outer region (42) protruding from the radial intermediate region (44) axially opposite to and radially away from the axial inner region (46), the axial inner region (46) of a first turn being interiorly applied on the axial inner region (46) of a second turn adjacent to the first turn.

8. The pipe (10) according to any of the preceding claims, **characterized in that** the carcass (26) includes a plurality of stapled turns, each turn of the carcass (26) having an inner portion (32), an intermediate portion (34), the inner portion (32) having the shape of a U bent back towards the intermediate portion (34) and an outer portion (36), the outer portion (36) having the shape of a bent-back U towards the intermediate portion (34),
the axial outer region (42) of each turn of the helicoidal insert (28) being clamped between the inner portion (32) of a first turn of the carcass (26) and the outer portion (36) of a second turn of the carcass (26) being engaged into the first turn of the carcass (26).
the radial intermediate region (44) being optionally applied against the intermediate portion (34), the inner region (46) advantageously protruding axially beyond the inner portion (32).

9. The pipe (10) according to any of the preceding claims, **characterized in that** the helicoidal insert (28) delimits at least one duct (120) for the passing of fluid connecting the gap (40) to the circulation passage (16), the duct being advantageously delimited by an imprint and/or a raised/recessed portion present in the outer region (42) and/or in the inner region (46).

10. The pipe (10) according to any of the preceding claims, wherein the first tape delimits a plurality of interlocked turns.

11. The pipe (10) according to any of the preceding claims, wherein the radial intermediate region (44) of the insert (28) is positioned in the helicoidal gap (40).

12. A method for manufacturing a flexible pipe (10), comprising the following steps:
- forming an internal carcass (26) able to come into contact with the fluid circulating in the pressure sheath (20), the internal carcass (26) comprising a first bent tape (31) delimiting a helicoidal gap (40) opening towards the central axis (A-A');
- producing an internal polymeric sheath (20) delimiting a passage (16) for circulation of fluid with a central axis (A-A'), the internal carcass (26) being positioned in the internal sheath (20);
- positioning at least one external armor layer (24, 25) outside the internal sheath (20);
the method including the setting into place of a helicoidal insert (28) in the helicoidal gap (40),
**characterized in that** the helicoidal insert (28) is partly positioned in the helicoidal gap (40) and obturates the helicoidal gap (40) towards the central axis (A-A'),
the helicoidal insert (28) having a lazy-S-shaped section, taken in a axial midplane, the lazy-S-shaped section including an axial outer region (42), a radial intermediate region (44) and an axial inner region (46) protruding from the radial intermediate region (44) axially opposite to and radially away from the axial outer region (42), the axial inner region (46) obturating at least partly the helicoidal gap (40),
and **in that** the inner assembly formed by the carcass (26) and by the insert (28) is permeable to the passing of the fluid from the inside of the carcass (26) to the outside of the carcass (26).

13. The method according to claim 12, **characterized in that** it includes the passage of a second tape (48) in an insert profiler (80) in order to form an insert profile (87) with a lazy-S-shaped section, the method including the passing of the first tape (31) in a carcass profiler (76) in order to form a carcass profile (85) and the winding of the carcass profile (85) and of the insert profile (87) on the mandrel (72).
the insert profiler (80) and the carcass profiler (76) being optionally positioned on a same side of the mandrel (72) or on either side of the mandrel (72).

14. The method according to claim 13, **characterized in that** it includes, downstream from the insert profiler (80) and from the carcass profiler (76), and upstream from the mandrel (72) a step for applying the insert profile (87) against the carcass profile (85) in order to form a combined profile (112) wound on the mandrel (72),
the combined profile (112) being optionally urged on the mandrel (72) after the applying step.
